# EUROPEAN PATENT APPLICATION

(11) **EP 1 717 700 A2**
(43) Date of publication of application: **02.11.2006**
(21) Application number: 06252201.6
(22) Date of filing: 24.04.2006
(51) Int. Cl.: G06F 9/445

(54) **Multimedia devices with enhanced functionality**

(30) Priority: 25.04.2005 US 113032
(71) Applicant: Perception Digital Limited, Clear Water Bay, Kowloon, Hong Kong (HK)
(72) Inventor: Choi, Koon Yin, New Territories (HK); Tsui, Chi Ying, Clear water Bay Kowloon (HK)
(74) Representative: Howe, Steven

(57) **Abstract**

Multimedia devices such as portable digital music and video players may be provided with enhanced functionality by providing the multimedia device with a connection program stored in the memory of the device such that upon connection to a PC the connection program is loaded to the PC and executed in the PC. Once connected to the PC the device mimics a logical device connected to the PC and allows the autorun of application programs stored in the device.

## Description

### FIELD OF THE INVENTION

This invention relates to multimedia devices with enhanced functionality, and in particular to portable digital multimedia devices having enhanced functionality and network connectivity.

### BACKGROUND OF THE INVENTION

A wide variety of portable digital multimedia devices are known. Such devices (hereinafter referred to simply as "portable device") store device-dependent application software (hereinafter referred to simply as "firmware") and data on a built-in and/or removable memory (including flash memory, magnetic storage such as magnetic disk drive, or any other means of storage device). Portable devices usually consist of the following main components: embedded processors for multimedia processing and user-input processing; input and output devices such as a LCD, buttons, audio/video output ports; means for connecting to personal computer (PC) such as Universal Serial Bus (USB) connection or IEEE 1394 connection; primary and secondary memories which store the application programs that are executed by the processors embedded within the device, multimedia data and any other useful data.

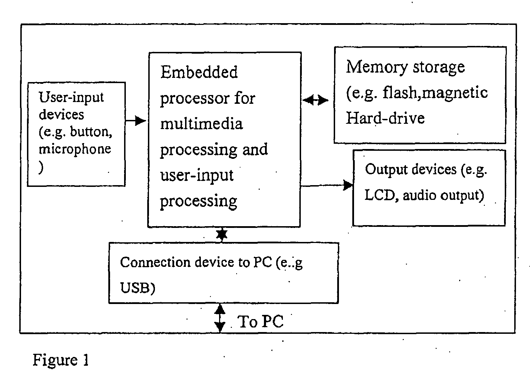

Figure 1 shows a simple block diagram of a typical portable device. Due to the constraints on the physical size of the device, and constraints on the computation power of the embedded processors, the applications that the portable device can execute are limited. For example, generally a portable digital audio player can only be used to playback audio files stored in the embedded memory storage and download files from the computer. Some advance features such as media content management, online media content purchase and song re-sampling are not possible. The situation is even tougher for personal multimedia players (PMPs) because end-users expect more from the portable device.

A common method for enabling advanced features in such devices is to equip a device with a better processor, integrate the device with an application specific hardware component (e.g. sub-processor, TCP/IP interface or wireless interface) and invest manpower to develop very efficient firmware. However, these solutions lead to devices that will be comparatively large and bulky as well as requiring a significant increase in production and development costs.

### SUMMARY OF THE INVENTION

According to the present invention there is provided a method of executing an application program stored in a portable device, comprising the steps of:
(a) connecting the portable device to a computer,
(b) automatically loading a connection program stored in said portable device to said computer and executing said connection program in said computer, and
(c) loading said application program to said computer and executing said application program in said computer.

Preferably, upon execution the connection program polls the portable device for any user input specifying an application program to be executed.

In some embodiments of the invention upon execution in the computer the application program transfers data from the portable device to the computer for processing by the computer. In other embodiments, however, upon execution in the computer the application program transfers data stored in the computer to the portable device.

In still further embodiments of the invention upon execution in the computer the application program may connect the portable device to a remote location through the computer. An example of such a connection to a remote location may be that the application program establishes an Internet connection to a server such as web server. To do this the application program may include an embedded Internet address. Upon connection to the remote location the application program may transfer data (eg audio and/or video files) from the remote location to the portable device. In other embodiments of the invention upon connection to the remote location the application program transfers data from the portable device to the remote location. In such embodiments the application program may include an email agent.

According to the invention there is also provided a system for executing an application program comprising a computer and a portable device provided with a memory means and means for connecting to said computer, wherein said memory means stores said application program and a connection program, wherein upon connection of said portable device to said computer said connection program is automatically loaded to said computer and executed therein, and then loading said application program to said computer and executing said application program.

A plurality of application programs may stored in the memory means and upon execution the connection program polls the portable device for any user input specifying an application program to be executed.

In some embodiments of the invention upon execution in the computer the application program transfers data from the portable device to the computer for processing by the computer. In other embodiments upon execution in the computer the application program transfers data stored in the computer to the portable device.

In still further embodiments of the invention upon execution in the computer the application program connects the portable device to a remote location through the computer. For example the application program may establishes an Internet connection to a server such as a web server. The application program may include an embedded Internet address. Upon connection to the remote location the application program may transfer data (eg audio and video files, firmware upgrades) from the remote location to the portable device. Alternatively the application program may transfer data from the portable device to the remote location and may include an email agent.

Viewed from another broad aspect the present invention provides a method of transferring data from a portable device to a computer comprising the steps of:
(a) connecting said portable device to said computer,
(b) automatically loading a connection program stored in a memory of said portable device to said computer and executing said connection program in said computer, and
(c) loading a data transfer application program stored in said portable device memory to said computer and executing said data transfer application program to transfer data from said portable device to said computer.

Viewed from a further broad aspect the present invention provides a method of transferring data from a computer to a portable device comprising the steps of:
(a) connecting said portable device to said computer,
(b) automatically loading a connection program stored in a memory of said portable device to said computer and executing said connection program in said computer, and
(c) loading a data transfer application program stored in said portable device memory to said computer and executing said data transfer application program to transfer data from said computer to said portable device.

Viewed from a still further broad aspect the present invention provides a method of connecting a portable device to a remote location through a computer comprising the steps of:
(a) connecting said portable device to said computer,
(b) automatically loading a connection program stored in a memory of said portable device to said computer and executing said connection program in said computer, and
(c) loading a remote location connection application program stored in said portable device memory to said computer and executing said remote location connection application program to connect said portable device to said remote location through said computer.

### BRIEF DESCRIPTION OF THE DRAWINGS

Some embodiments of the invention will now be described by the way of example and with reference to the accompanying drawings, in which:-
Fig.1 is a block diagram of the basic structure of a conventional portable device,
Fig.2(a)-(d) are block diagrams schematically illustrating the stages comprising embodiments of the invention,
Fig.3 is a flowchart illustrating the basic flow of an embodiment of the invention, and
Fig.4 illustrates an example of how the memory of a portable device may be portioned in an embodiment of the invention.

### DETAILED DESCRIPTION OF PREFERRED EMBODIMENTS

The present invention, at least in its preferred forms, provides a method of expanding the functionality and connectivity of portable devices when connected to a PC through a communication link. The invention further takes advantage of the "autorun" feature found in certain operating system such as Microsoft Windows, MAC OS and some Unix systems to automate the flow.

In the following illustration, the embodiments of invention are assumed to be provided with a USB connection and the operating system is assumed to be Microsoft Windows although the embodiments of invention operate in wider range of conditions and the invention should not be understood to be limited thereto. For Microsoft Windows system, the action taken is determined by a file called AUTORUN.INF.

Autorun is a feature whereby the operating system of a personal computer will, upon detecting a logical device connected to the PC, automatically execute an application specific program which is stored in the logical device. In the present invention the application-specific program is stored in the portable device. When connected to the PC, the portable device will mimic a logical device connected to the PC and the autorun feature will start to execute the application specific program (hereinafter referred to as "the connection program"). Upon execution, the connection program interacts and interprets inputs from the portable device through its mechanical human user interface, such as user input buttons. For different input patterns, the connection program will load a corresponding application program (hereinafter referred to as "the application program") which is stored in the memory storage of the portable device to the PC and execute the application program. (refer to US patent 6405362 for example).

Unlike conventional existing PC applications, all programs are initiated from the portable device instead of from the PC. An advantage of this is that the PC does not need to have the programs pre-installed and the applications can be executed in any PC equipped with an operating system that supports autorun. Furthermore the end-users do not need to worry about the PC configuration and software requirement. It is even possible for the application program to be executed in a PC that is without any Input/Output devices (such as keyboard, mouse, monitor) since the application program(s) is/are initiated from the portable device connected to the PC. Of course, some other application programs, once initiated via the autorun mechanism, may ask users for additional inputs through the normal PC input/output devices (such as keyboard, mouse, etc) In this manner, a lot of new functions can be provided for the portable device.

In the following, embodiments of the invention are described that explain the mechanism of how to support "autorun" features from the portable device. Also described are new applications that run on the portable devices that support this "autorun" function.

In an embodiment of the invention when the portable device is connected to the PC, the portable device acts as a mass storage device. At the same time, firmware is provided that resides in the device and which serves to identify the device media (i.e. the memory storage in the portable device) to the PC as an autorun logical unit. An application-specific communication program (the connection program), which is stored in the memory storage of the portable device is then executed by the "autorun" feature of the operating system of the PC. Upon execution of the connection program, the connection program will poll the portable device for user inputs. When the user provides a certain pre-defmed input event, the program will load in the corresponding application program from the memory storage in the device to the PC and trigger the PC to execute this application program. The number of application programs that can be stored in the memory of the portable device can be freely chosen, depending only on how many different input combinations the portable device supports. Alternatively, in a very simple embodiment, the portable device may store only a single application program in which case there is no need for the connection program to poll the portable device for user inputs and may instead immediately load and execute in the PC the single application program stored in the portable device.

The connection program and the application programs are stored in the memory storage location of the portable device in which the PC enumerates the location as a logical unit. To prevent the user from accidentally deleting or removing these programs, the memory storage locations that store these programs are non-formattable and non-writable under the normal operation of the PC shell. It should be noted that these application programs are stored in the portable device and the invocation of the programs is initiated from the portable device. There is therefore no need for the user to interact with the PC for the execution of the programs.

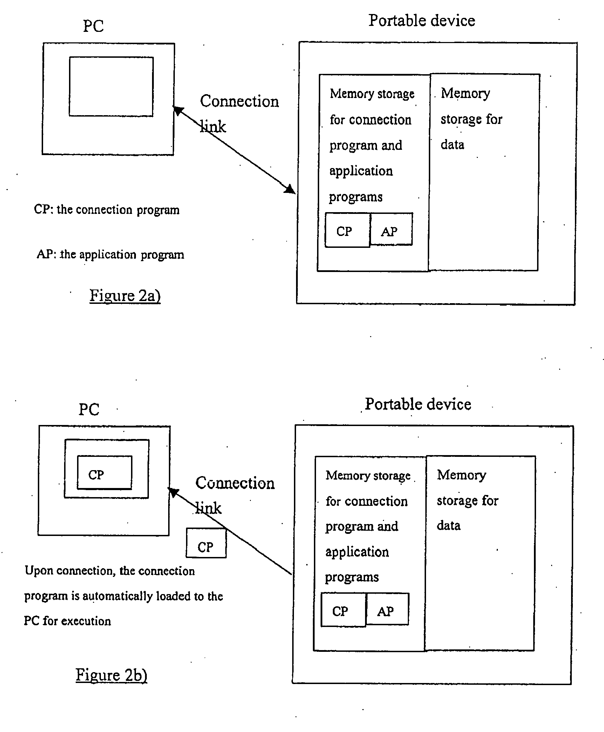

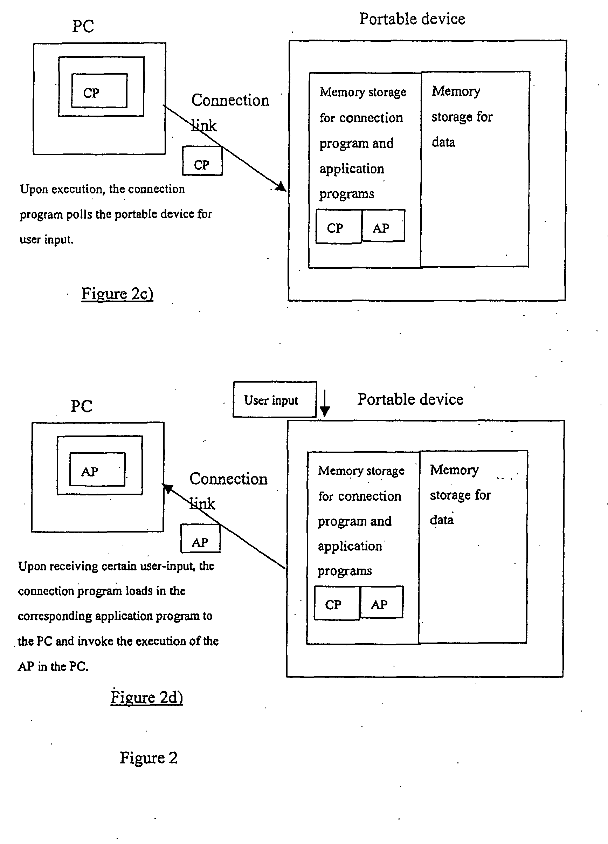

Figures 2(a)-(d) show the execution flow of this mechanism according to an embodiment of the invention. As can be seen in Fig.2(a) the portable device 1 comprises memory storage 2 that may take the form of any conventional memory storage as may be employed in a portable device such as a digital multimedia player, eg persistent solid-state flash memory, or a hard disk. Apart 2a of the memory is set aside for data storage, while a part 2b of the memory stores the connection program (CP) and one or more application programs (AP). The portable device may be connected to a PC 3 by means of a connection link 4 such as a USB connection. Referring to Fig.2(b), upon connection of the portable device 2 to the computer 3, the PC 3 sees the portable device 1 as a logical device and the connection program (CP) is automatically loaded and executed by the autorun facility of the operating system of the PC 3. As is shown in Fig.2(c) once the connection program CP has been loaded and executed by the PC 3, the connection program CP polls the portable device 1 for user inputs that indicate a particular application program to be loaded. Upon identifying such user inputs the connection program CP loads the corresponding application program AP to the PC and the application program AP is then invoked (Fig.2(d)).

The present invention, at least in preferred forms, comprises the following elements:
1. The portable device emulates a CD-ROM drive upon USB connection with a PC.
2. A platform to archive OS-dependent software to plurality of CD-ROM ISO images and embed to the media of the portable device.
3. An OS-dependent connection program to be autorun and interact with the device. The connection program is normally without user interface so that it is transparent to the user.
4. The portable device will, depending on user-input or state, communicate with the connection program so that the connection program can load from the portable device the corresponding application program and then execute it in the PC.

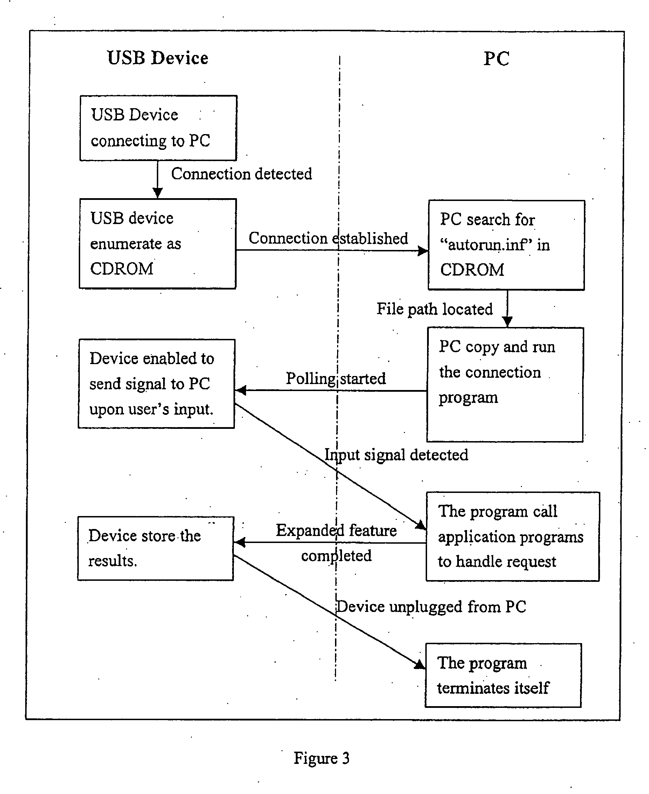

Figure 3 demonstrates the basic flow of the invention.

When the user wants to operate the add-on functionality of the portable device, he plugs the portable device to the PC through a USB connection. The PC does not need to have any pre-installed software. Upon USB connection detection, the portable device will emulate a CD-ROM drive.

The PC discovers that a new removable CD-ROM drive is enumerated and the event monitor residing in the computer will search for the autorun configuration file to locate the path of the connection program. After the computer locates the application to be launched, it will copy the connection program from the enumerated CD-ROM drive media area to the PC's internal RAM. When the copy process is completed, the PC will run the connection program.

The connection program interacts with the device by two methods. For commands and parameters, the program polls the device and fetches the application-specific protocol, which originates from the designer. Polling is required because the PC is the host and the portable device is the slave. Whatever actions take place in the portable device, the portable device will not inform the host actively. For media data, the PC can read/write the corresponding file directly through the mass storage device interface.

The whole scheme is transparent to the user while the expanded feature is automatically enabled. When the user presses the portable device button or generates a device user input signal by predefined means, the next poll of the connection program will get the protocol and decoded the instruction. The program will further call application programs to handle the request.

The application program is the core of the expanded feature capability.The application program can be a computational intensive algorithm to process the media on the portable device, or it can act as a bridge or vehicle to connect to a website or to communicate to another program in a website in the internet. Upon expanded feature completion, the application program stores the results (such as media, device configuration information and database) back to the portable device.

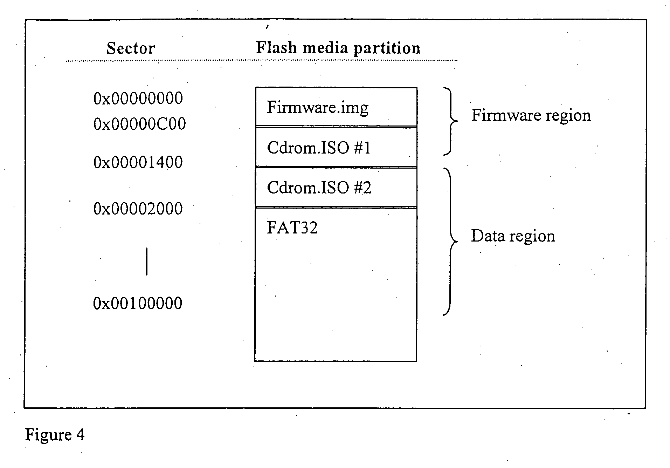

Besides using polling to invoke an application program stored inside the portable device according to an embodiment of the invention, the portable device may also be able to emulate different CD ROM images depending on the user input. Short-cut keys can be used to trigger the portable device to emulate the unloading of a CD ROM image and reinserting another CD ROM image causing the computer to invoke a different program. Figure 4 demonstrates how these images may be stored in the portable device media. In the example of Figure 4 two images named Cdrom.ISO#1 and Cdrom.ISO#2 are shown, though it will be understood that the number of images is of course not limited to two. Moreover, different operating systems (e.g. MAC OS, Window, Unix, etc) will require different connection programs. Multiple CD-ROM ISO images, each for one operating system, will need to be stored in the portable device if the portable device needs to provide this autorun feature in PC with different operating systems.

If the user unplugs the portable device from the PC, the connection program will detect the detachment of the portable device and will terminates itself.

Using embodiments of the invention, a variety of applications can be added to the portable devices. In particular by means of preferred embodiments of the invention it is possible to utilize the local resources of the PC to process and manipulate the data stored in the portable device. Moreover when the PC is connected to the Internet, by using the embodiments of the invention the portable device can utilize the global resources in the Internet to process and manipulate the data stored in the portable device. In general terms preferred embodiments of the invention may be employed to expand the functionality of the portable device in a number of ways. For example the greater processing power of the computer may be used to process data stored on the portable device, or alternatively data stored on the PC may be processed (e.g. compressed) and sent to the portable device. If the PC also includes an Internet connection, or a connection to any other form of network, then embodiments of the invention may be used to transfer data from a remote source to the portable device or from the portable device to a remote source.

The followings are several illustrations of how embodiments of the invention may be applied.

In one embodiment of the invention the local resources of the PC may be used to process the data stored in the portable device. For example, when executing the application program, the application program can take data from the portable device, process the data using the processor of the PC (which is usually much more powerful than the embedded processor of the portable device) and then either store back the results into the portable device or output them using the output devices (such as printer, LCD monitor) of the PC. For example, if the portable device stores digital compressed images the application program that is stored in the portable device may contain a decoder for the images and upon execution of application program, the images will be decoded and shown in the LCD monitor of the PC or sent to the printer for printing.

In another embodiment of the invention the local resources of the PC may be used to process data stored in the PC and then send the processed data to the memory storage of the portable device. For example, upon execution the application program may take data available in the PC, process this data by the processor of the PC, and then send this data to the portable device to be stored into the memory storage of compression engine, then upon the execution the application program may take any audio files (e.g. songs or other music files) that are stored in the memory device of the PC (e.g. the CD on the CDROM of the PC), compress them and then send them to the portable device for storage in the memory storage of the portable device.

In a further embodiment of the invention the PC may be used to connect the portable device to the Internet. In this embodiment, when the application program is executed the application program will launch an Internet connection to a predefined website (the address of which is embedded inside the application program) and will establish a communication link between the portable device and the website via the PC. The portable device can then request data from the website. Upon verification and certification (if any) which can betide with an unique ID provided by the portable device, the data can be encrypted and sent to the portable device and stored in the memory storage of the portable device. An example of such an embodiment is the automatic purchasing of audio and/or video files for storage on the portable devices. The application program will obtain the ID from the portable device and send to the website for verification. Upon verification, the website will encrypt the audio and/or video files with the corresponding ID and send them back to the portable device.

Another embodiment of the invention may be used to provide automatic firmware upgrades for the portable device. In this embodiment the application program will establish a link to the website of the manufacturer of the portable device (the address for which is embedded in the application program). The application program will also get the model number and the current firmware version of the portable device and send the information to the website. The website will search for the appropriate firmware and if there is a more updated version of the firmware, it will send back the updated version to the portable device through the PC and Internet and upgrade the firmware of the portable device automatically. Note that all these actions are initiated by pressing one button or triggering a single input event of the portable device without any action from the PC.

In another embodiment of the invention the application prograin may be invoked to send data from the portable device to a remote location through an internet connection via the PC. In this embodiment when the application program is executed, the program will launch an Internet connection to a website (the address for which is embedded inside the application program or specified by the user in the portable device) and establish a communication link. The application program will then get data stored in the portable device and send the data to the remote website or Internet location. An example of such an embodiment is where the application program contains an email agent. Upon execution of the application program, the program will get data from the portable device (the data can be either text data or multimedia data), pack the data in an email message and then send the message to an email address predefined by the user through the email agent embedded in the application program.

From the above, it can be seen that the functionality and the connectivity of a portable device can be enhanced by using the mechanism described in this invention application which support the "autorun" feature provided by the operating system of the PC.

## Claims

1. A method of executing an application program stored in a portable device, comprising the steps of:
(a) connecting the portable device to a computer,
(b) automatically loading a connection program stored in said portable device to said computer and executing said connection program in said computer, and
(c) loading said application program to said computer and executing said application program in said computer.

2. A method as claimed in claim 1 wherein upon execution said connection program polls said portable device for any user input specifying an application program to be executed.

3. A method as claimed in claim 1 wherein upon execution in said computer said application program transfers data from said portable device to said computer for processing by said computer.

4. A method as claimed in claim 1 wherein upon execution in said computer said application program transfers data stored in said computer to said portable device.

5. A method as claimed in claim 1 wherein upon execution in said computer said application program connects said portable device to a remote location through said computer.

6. A method as claimed in claim 5 wherein said application program establishes an Internet connection to a server such as web server.

7. A method as claimed in claim 6 wherein said application program includes an embedded Internet address.

8. A method as claimed in claim 5 wherein upon connection to the remote location the application program transfers data from the remote location to the portable device.

9. A method as claimed in claim 8 wherein said data comprises audio and/or video files.

10. A method as claimed in claim 5 wherein upon connection to the remote location the application program transfers data from the portable device to the remote location.

11. A method as claimed in claim 10 wherein the application program includes an email agent.

12. A system for executing an application program comprising a computer and a portable device provided with a memory means and means for connecting to said computer, wherein said memory means stores said application program and a connection program, wherein upon connection of said portable device to said computer said connection program is automatically loaded to said computer and executed therein, and then loading said application program to said computer and executing said application program.

13. A system as claimed in claim 12 wherein a plurality of application programs are stored in said memory means and wherein upon execution said connection program polls said portable device for any user input specifying an application program to be executed.

14. A system as claimed in claim 12 wherein upon execution in said computer said application program transfers data from said portable device to said computer for processing by said computer.

15. A system as claimed in claim 12 wherein upon execution in said computer said application program transfers data stored in said computer to said portable device.

16. A system as claimed in claim 13 wherein upon execution in said computer said application program connects said portable device to a remote location through said computer.

17. A system as claimed in claim 16 wherein said application program establishes an Internet connection to a server

18. A system as claimed in claim 17 wherein said server is a web server.

19. A system as claimed in claim 18 wherein said application program includes an embedded Internet address.

20. A system as claimed in claim 18 wherein upon connection to the remote location the application program transfers data from the remote location to the portable device.

21. A system as claimed in claim 18 wherein said data comprises audio and/or video data files.

22. A system as claimed in claim 18 wherein said data comprises firmware upgrades.

23. A system as claimed in claim 18 wherein upon connection to the remote location the application program transfers data from the portable device to the remote location.

24. A system as claimed in claim 23 wherein the application program includes an email agent.

25. A method of transferring data from a portable device to a computer comprising the steps of:
(a) connecting said portable device to said computer,
(b) automatically loading a connection program stored in a memory of said portable device to said computer and executing said connection program in said computer, and
(c) loading a data transfer application program stored in said portable device memory to said computer and executing said data transfer application program to transfer data from said portable device to said computer.

26. A method of transferring data from a computer to a portable device comprising the steps of:
(a) connecting said portable device to said computer,
(b) automatically loading a connection program stored in a memory of said portable device to said computer and executing said connection program in said computer, and
(c) loading a data transfer application program stored in said portable device memory to said computer and executing said data transfer application program to transfer data from said computer to said portable device.

27. A method of connecting a portable device to a remote location through a computer comprising the steps of:
(a) connecting said portable device to said computer,
(b) automatically loading a connection program stored in a memory of said portable device to said computer and executing said connection program in said computer, and
(c) loading a remote location connection application program stored in said portable device memory to said computer and executing said remote location connection application program to connect said portable device to said remote location through said computer.

28. A method as claimed in claim 27 wherein said application program includes an embedded Internet address and said application program connects said portable device to a server.

29. A method as claimed in claim 27 wherein said application program transfers data from said remote location to said portable device.

30. A method as claimed in claim 29 wherein said data includes audio and/or video files.

31. A method as claimed in claim 29 wherein said data includes firmware upgrades.

32. A method as claimed in claim 27 wherein said application program transfers data from said portable device to said remote location.

33. A method as claimed in claim 32 wherein said application program includes an email agent.
